(19) Europäisches Patentamt
European Patent Office
Office européen des brevets

(11) **EP 2 157 352 B1**

(12) **EUROPÄISCHE PATENTSCHRIFT**

(45) Veröffentlichungstag und Bekanntmachung des Hinweises auf die Patenterteilung:
**15.12.2010 Patentblatt 2010/50**

(51) Int Cl.:
***F16L 37/14*** *(2006.01)*

(21) Anmeldenummer: **08014704.4**

(22) Anmeldetag: **19.08.2008**

(54) **Kupplung, insbesondere Rohrkupplung**

Coupling, in particular pipe coupling

Raccord, en particulier raccord de tuyaux

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**24.02.2010 Patentblatt 2010/08**

(73) Patentinhaber: **Karl Hamacher GmbH**
**44866 Bochum (DE)**

(72) Erfinder: **Füsser, Bernd**
**45219 Essen (DE)**

(74) Vertreter: **Nunnenkamp, Jörg et al**
**Andrejewski Honke**
**Patent- und Rechtsanwälte**
**Theaterplatz 3**
**45127 Essen (DE)**

(56) Entgegenhaltungen:
**EP-A- 1 865 244      DE-A1-102005 001 993**
**DE-C1- 10 146 186    DE-U1- 29 704 063**
**US-A- 5 255 945      US-A1- 2003 234 536**

**Beschreibung**

Die Erfindung betrifft eine Kupplung, insbesondere Rohrkupplung für Hochdruckrohre oder Hochdruckschläuche, mit jeweils an zu verbindenden Enden vorgesehenen Kupplungsmuffen, und mit wenigstens einem die Kupplungsmuffen mit Hilfe von zumindest zwei Scherelementen koppelnden Kupplungsstück mit in die Kupplungsmuffe jeweils eingreifendem Steckzapfen, wobei der jeweilige Steckzapfen und die Kupplungsmuffe eine aus zwei Nuthälften zusammengesetzte Einschubnut für das zugehörige Scherelement definieren, und wobei die Nuthälfte im Steckzapfen und/oder die Nuthälfte in der Kupplungsmuffe in Aufschubrichtung der Kupplungsmuffe in einen Konusbereich übergeht.

Eine solche Kupplung wird beispielhaft in der EP 1 865 244 A2 beschrieben und hat sich grundsätzlich bewährt. Allerdings ist der Zusammenbau verbesserungsbedürftig. Denn solche Kupplungen werden oftmals unter Tage zur Kopplung von Rohren zu Rohrleitungen verwendet. Hier ist nicht nur der Einbauraum begrenzt, sondern fällt die exakt axiale Ausrichtung der Rohre bzw. ihrer zu verbindenden Enden zueinander schwer.

Zwar gibt es im weiteren Stand der Technik bereits Ansätze dahingehend, bei einer Rohrverbindung das Zusammenführen von Muffe und Steckende zu erleichtern. Die an dieser Stelle relevante DE 297 04 063 U1 schlägt dazu eine Rohrverbindung mit Sperrelement vor, bei welcher an Steck- bzw. Muffenende die Wanddicke der Rohre durch eine radial nach innen bzw. radial nach außen abgesetzte Stufe reduziert ist. Dabei sollen die Stufen am Steckende und Muffenende spiegelbildlich konisch verlaufen. Allerdings ist eine Wanddickenreduzierung bei den hier zum Einsatz kommenden Hochdruckrohren und Hochdruckschläuchen nicht akzeptabel.

Tatsächlich dienen die Hochdruckrohre bzw. Hochdruckschläuche üblicherweise dazu, ein Hydraulikmedium zu einer Hydraulikmaschine zu transportieren, wobei Druckbeaufschlagungen mit mehr als 50 bar oder sogar mehr als 100 bar gebräuchlich sind. Aus diesem Grund verbieten sich jegliche Ansätze dahingehend, die Wanddicke zu reduzieren.

Ganz abgesehen davon stellt sich bei Rohrverbindungen für Hochdruckrohre oder Hochdruckschläuche das Problem, etwaige Aufweitungen im Verbindungsbereich zu vermeiden. Hier schlägt die DE 10 2005 001 993 A1 bei einer Steckmuffenrohrverbindung für Steigleitungsrohre - also in anderem Zusammenhang - vor, dass das Spitzende und die Kupplung mit axial ineinandergreifenden Verzahnungsmitteln ausgerüstet sein sollen. Die Verbindung der Enden bzw. der Rohrenden untereinander ist allerdings nach wie vor problematisch, stellt bei Steigleitungsrohren jedoch kein wesentliches Kriterium dar, weil hier üblicherweise die axiale Ausrichtung zueinander problemlos gelingt.

Der Erfindung liegt das technische Problem zugrunde, eine gattungsgemäße Kupplung, insbesondere Rohrkupplung für Hochdruckrohre oder Hochdruckschläuche, so weiter zu entwickeln, dass der Zusammenbau erleichtert ist und zugleich eine besonders funktionsgerechte und stabile Verbindung zur Verfügung gestellt wird.

Zur Lösung dieser technischen Problemstellung ist bei einer gattungsgemäßen Kupplung, insbesondere Rohrkupplung für Hochdruckrohre oder Hochdruckschläuche, vorgesehen, dass sich an den Konusbereich in Aufschubrichtung der Kupplungsmuffe ein Klemmbereich anschließt, dass ferner die jeweilige Kupplungsmuffe mit einem Fortsatz in eine Einschubnut am Kupplungsstück und dadurch in den Klemmbereich eingreift, und dass die Einschubnuten zusammen mit Vorsprüngen einen insgesamt T-förmigen Anschlag am Kupplungsstück für die hiergegen jeweils anliegende Kupplungsmuffe formen.

Im Rahmen der Erfindung wird also der Steckzapfen und/oder die Kupplungsmuffe mit einem zusätzlichen Konusbereich bzw. Zentrierkonusbereich ausgerüstet. Dieser Konusbereich schließt sich an die dortige jeweilige Nuthälfte der aus den beiden Nuthälften zusammengesetzten Einschubnut für das Scherelement an, und zwar in Aufschiebrichtung bzw. Aufschubrichtung der Kupplungsmuffe. Dadurch besteht die Möglichkeit, den Steckzapfen und die zugehörige Kupplungsmuffe in gewisser Weise in axialer Richtung winklig zueinander auszurichten, wobei zugleich die Option beibehalten wird, das Scherelement in die Einschubnut einführen zu können. Tatsächlich werden an dieser Stelle Abwinklungen von einigen Grad (bis zu 10°) zwischen Steckzapfen und Kupplungsmuffe beobachtet und ausdrücklich zugelassen. Das ist im Hinblick auf die begrenzten Einbauverhältnisse insbesondere im untertägigen Betrieb von besonderer Bedeutung und erleichtert die Kopplung einzelner Rohre zu einer Rohrleitung enorm.

Hinzu kommt, dass die zu verbindenden Rohre an ihren Enden jeweils mit gleich ausgebildeten Kupplungsmuffen ausgerüstet sind. Es ist also nicht erforderlich, beispielsweise zwischen Steckende und Muffenende zu unterscheiden, wie dies die DE 297 04 063 U1 ausdrücklich vorschreibt. Eine solche Unterscheidung ist im untertägigen Bereich praktisch auch nicht möglich, weil ein Rohr aufgrund der beengten Einbauverhältnisse nicht gedreht oder gewendet werden kann. Folglich greift die Erfindung bewusst auf jeweils gleich ausgebildete Kupplungsmuffen an den zu verbindenden Enden der Hochdruckrohre respektive Hochdruckschläuche zurück. Dabei ist es lediglich noch erforderlich, diese zu verbindenden zwei Enden mit Hilfe des zwischengeschalteten Kupplungsstückes mediumdicht zu koppeln.

Wie bereits erläutert, schließt sich an den bereits beschriebenen Konusbereich bzw. Zentrierkonusbereich in Aufschubrichtung der Kupplungsmuffe der Klemmbereich an. Dieser Klemmbereich wird zwischen der jeweiligen Kupplungsmuffe und dem Kupplungsstück gebildet bzw. stellt sich durch das Zusammenspiel des Fortsatzes an der Kupplungsmuffe mit der Klemmnut bzw. Einschubnut am Kupplungsstück ein. Zu diesem Zweck verfügt das Kupplungsstück vorteilhaft im Klemmbereich über einen jeweiligen Vorsprung, welcher einen Anlagebereich übergreift. Meistens wird hierdurch im Querschnitt ein U-förmiges Übergreifen erreicht, so dass die Klemmnut bzw. Einschubnut im Querschnitt U-förmig ausgebildet ist. Das heißt, die Klemmnut wird zwischen dem Vorsprung und dem Anlagebereich an dem Kupplungsstück gebildet. Der Fortsatz greift in die Klemmnut ein.

Weil das Kupplungsstück zur Festlegung von zwei Kupplungsmuffen eingerichtet ist, die sich üblicherweise in Bezug auf eine Spiegelachse gegenüberliegen, ist das Kupplungsstück regelmäßig spiegelsymmetrisch im Vergleich zu dieser in Querrichtung zur Längserstreckung der Rohre bzw. Schläuche angeordneten Achse ausgestaltet. Dadurch verfügt das Kupplungsstück über den insgesamt T-förmigen Anschlag für die hieran jeweils anliegenden Kupplungsmuffen. Dieser T-förmige Anschlag ist mit den beidseitigen U-förmigen Klemmnuten ausgerüstet, in welche jeweils die Fortsätze an den zugehörigen Kupplungsmuffen in montierter Stellung eingreifen.

Dabei ist die Auslegung insgesamt so getroffen, dass in Aufschubrichtung der Kupplungsmuffe an die Einschubnut bzw. die zugehörige Nuthälfte der bereits angesprochene Konusbereich respektive Zentrierkonusbereich anschließt und diesem in Aufschubrichtung der Anlagebereich des Klemmbereiches folgt, welcher von dem Vorsprung übergriffen wird und auf diese Weise die Klemmnut mit dem U-förmigen Querschnitt zur Aufnahme des Fortsatzes an der Kupplungsmuffe bildet.

Darüber hinaus hat es sich als günstig erwiesen, wenn die Einschubnut für das Scherelement mit einem Ausweichbereich ausgerüstet ist. Dieser Ausweichbereich stellt sicher, dass das Scherelement mit Spiel in die betreffende Einschubnut eingeführt werden kann, gleichwohl bei einer entsprechenden Belastung für die gewünschte Verkeilung mit Scherwirkung zwischen dem Kupplungsstück bzw. dem zugehörigen Steckzapfen und der Kupplungsmuffe sorgt.

Dabei kann der Ausweichbereich so gestaltet sein, dass die Einschubnut eine axiale Länge aufweist, welche einen Durchmesser des meistens zylindrisch ausgebildeten Scherelementes übersteigt. Tatsächlich handelt es sich regelmäßig bei dem Scherelement um ein solches, wie es beispielsweise in der DE 101 46 186 C1 beschrieben wird. Das heißt, das Scherelement setzt sich im Wesentlichen aus einer Seele aus einem Kunststoffseil oder einem geflochtenen Stahlseil zusammen, auf welches meistens zylindrische Scherkörper aus Stahl aufgefädelt sind. Die Einschubnut verfügt nun über eine größere axiale Länge als der Durchmesser des Scherelementes bzw. der einzelnen gleich aufgebauten Scherkörper ausgebildet ist. Meistens beträgt die axiale Länge der Einschubnut in etwa das 1,2- bis 1,5-fache oder mehr des Durchmessers des betreffenden Scherelementes respektive des meistens eingesetzten zugehörigen Scherkörpers.

Darüber hinaus hat es sich bewährt, wenn wenigstens die Nuthälfte in der jeweiligen Kupplungsmuffe mit einer an einen kreisbogenartigen Bereich anschließenden Schrägflanke ausgerüstet ist. Tatsächlich verfügt die Schrägflanke über eine in Aufschubrichtung der Kupplungsmuffe ansteigende Kante. Auf diese Weise wird das Scherelement in der Einschubnut zunehmend geklemmt und sorgt mit wachsender Keilwirkung für eine Festlegung der Kupplungsmuffe an dem Kupplungsstück, falls sich die Kupplungsmuffe von dem Kupplungsstück bei im Hochdruckrohr oder Hochdruckschlauch anstehenden Druck axial und/oder radial voneinander wegbewegen.

Es ist bereits ausgeführt worden, dass das Kupplungsstück spiegelsymmetrisch im Vergleich zu der in Querrichtung angeordneten Spiegelachse ausgeführt ist. Außerdem ist das Kupplungsstück regelmäßig rotationssymmetrisch im Vergleich zur Rohrlängsachse gestaltet. Auf diese Weise formt die Einschubnut für den Fortsatz an der Kupplungsmuffe eine Einschubringnut am Kupplungsstück. Außerdem ist der T-förmige Anschlag an dem Kupplungsstück als T-förmiger Ringanschlag ausgestaltet. Des Weiteren formt die Nuthälfte im Kupplungsstück eine jeweilige Ringnut. Vergleichbares gilt für die zugehörige Kupplungsmuffe, welche ebenfalls rotationssymmetrisch im Vergleich zur zugehörigen Rohrlängsachse ausgestaltet ist. Als Folge hiervon ist die dortige Nuthälfte ebenfalls als Ringnut ausgestaltet und formt der in die Einschubnut eingreifende Fortsatz einen Ringfortsatz.

Des Weiteren hat es sich bewährt, wenn das Kupplungsstück mit einer jeweils endseitigen Anschrägung ausgerüstet ist. Diese Anschrägung geht üblicherweise in eine Anschrägung gleichen Winkels in der Kupplungsmuffe über. Auf diese Weise wird eine gleichmäßige Durchmesserverringerung im Hinblick auf den Innendurchmesser der Hochdruckrohre bzw. zu verbindenden Hochdruckschläuche im Bereich des Kupplungsstückes erreicht. Dieser verringerte Durchmesser vergrößert sich endseitig des Kupplungsstückes wieder bis der Innendurchmesser des angeschlossenen Rohres bzw. Schlauches erreicht wird.

Schlussendlich ist das Kupplungsstück axial außen im Vergleich zum Scherelement mit einer umlaufenden Nut für eine Ringdichtung ausgerüstet. Dadurch wird sichergestellt, dass an Stoßflächen zwischen der Kupplungsmuffe und dem Kupplungsstück gegebenenfalls eintretendes Medium bzw. Hydraulikmedium nicht bis zum Scherelement vordringt oder vordringen kann. - Gegenstand der Erfindung ist auch die Verwendung einer solchen Kupplung zur Verbindung von Hochdruckrohren, welche zur Beaufschlagung von Hydraulikmaschinen eingesetzt werden. Bei diesen Hydraulikmaschinen handelt es sich vorteilhaft um Vortriebsmaschinen im untertägigen Einsatz. Tatsächlich kommen solche Vortriebsmaschinen üblicherweise beim sogenannten Schildvortrieb in der untertägigen Mineralgewinnung, insbesondere Kohlegewinnung, zum Einsatz.

Im Ergebnis wird eine Kupplung, insbesondere Rohrkupplung zur Verfügung gestellt, die sich besonders einfach und funktionsgerecht herstellen lässt. Hierfür sorgt primär der Konusbereich bzw. Zentrierkonusbereich, welcher vorteilhaft am jeweiligen Steckzapfen ausgebildet ist. Dadurch werden auch Winkelstellungen zwischen Steckzapfen und hierauf anzubringender Kupplungsmuffe von einigen Grad (bis zu 10°) zugelassen. Gleichwohl kann das Scherelement in der aus beiden Nuthälften gebildeten Einschubnut platziert und in diese eingeführt werden.

Dieser Vorgang wird noch dadurch erleichtert, dass die Einschubnut für das Scherelement mit einem Ausweichbereich ausgerüstet ist und regelmäßig über eine axiale Länge verfügt, welche den Durchmesser des Scherelementes bzw. seiner Scherkörper überschreitet. Dadurch wird das Einführen des Scherelementes auch bei gegeneinander verkantetem Kupplungsstück und zugehöriger Kupplungsmuffe ermöglicht. Dennoch kommt das Scherelement einwandfrei seiner verkeilenden Wirkung nach, wofür unter anderem die Schrägflanke in der Nuthälfte der Kupplungsmuffe sorgt, die grundsätzlich natürlich auch in der Nuthälfte im Kupplungsstück ergänzend oder alternativ ausgebildet sein kann. Hierin sind die wesentlichen Vorteile zu sehen.

Im Folgenden wird die Erfindung anhand einer lediglich ein Ausführungsbeispiel darstellenden Zeichnung näher erläutert; es zeigen:

Fig. 1    die erfindungsgemäße Kupplung im zusammengebauten Zustand,

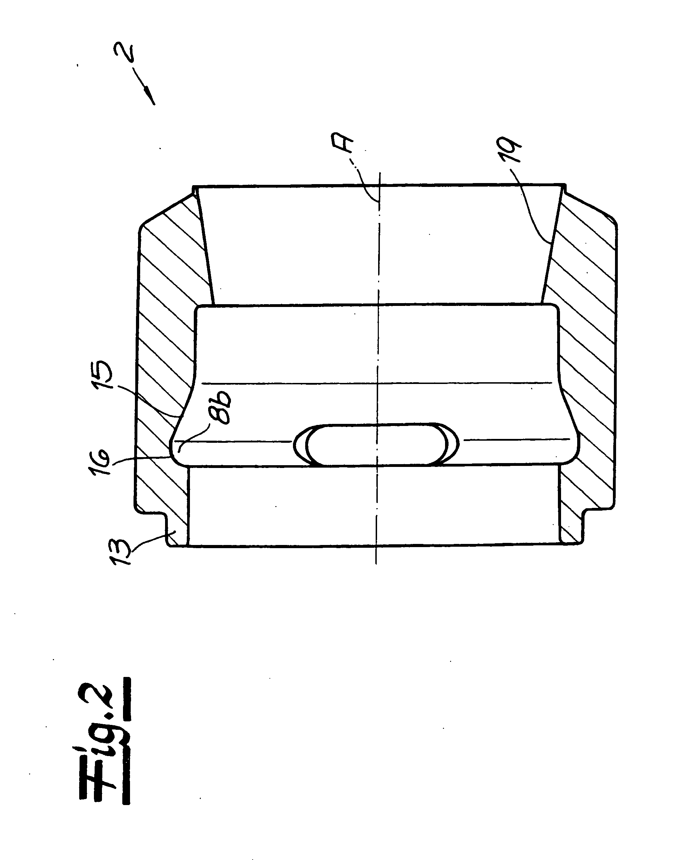

Fig. 2    die Kupplungsmuffe im Detail und

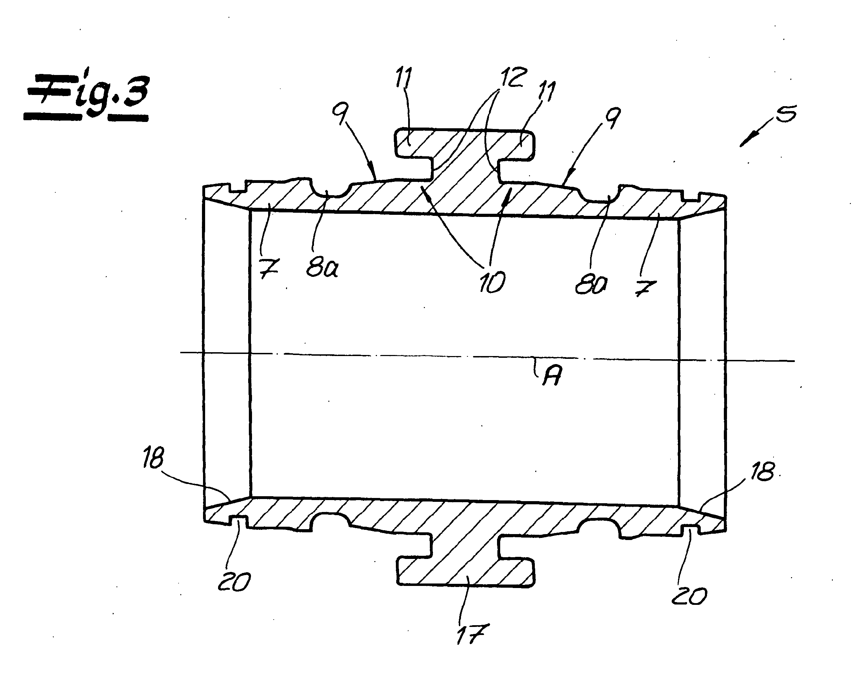

Fig. 3    das Kupplungsstück in einer Einzelübersicht.

In den Figuren ist eine Kupplung dargestellt, die sich besonders zur Verbindung von Hochdruckrohren 1 eignet. Anstelle der Hochdruckrohre 1 können aber auch Hochdruckschläuche mit der noch zu beschreibenden Kupplung verbunden werden. Hochdruckrohre 1 bzw. Hochdruckschläuche meint im Rahmen der Erfindung solche Rohre oder Schläuche, die mit einem Medium beaufschlagt werden, welches unter einem hohen Druck von wenigstens 50 bar üblicherweise sogar mehr als 100 bar, steht.

Zum grundsätzlichen Aufbau der Kupplung gehören Kupplungsmuffen 2, die an jeweils zu verbindende Enden 3 der Hochdruckrohre 1 angeschlossen sind. Für den Anschluss der Kupplungsmuffen 2 an die Enden 3 der Hochdruckrohre 1 sind vorliegend Schweißverbindungen 4 realisiert, was selbstverständlich nicht zwingend ist. Im Rahmen des Ausführungsbeispiels und ebenfalls nicht einschränkend sind sowohl die Hochdruckrohre 1 als auch die Kupplungsmuffen 2 aus Stahl oder hochfestem Stahl gefertigt. Vergleichbares gilt für ein die beiden Kupplungsmuffen 2 miteinander koppelndes Kupplungsstück 5.

Die beiden Kupplungsmuffen 2 an den Enden 3 der zu verbindenden Hochdruckrohre 1 werden mit Hilfe von zwei Scherelementen 6 mit dem Kupplungsstück 5 gekoppelt. Zu diesem Zweck verfügt das Kupplungsstück 5 über jeweils in die Kupplungsmuffe 2 eingreifende Steckzapfen 7. Der jeweilige Steckzapfen 7 und die Kupplungsmuffe 2 definieren eine aus zwei Nuthälften 8a, 8b zusammengesetzte Einschubnut 8a, 8b für das zugehörige Scherelement 6. Dabei ist die Nuthälfte 8a jeweils an dem Kupplungsstück 5 ausgebildet, wohingegen sich die Nuthälfte 8b der Einschubnut 8a, 8b an bzw. in der jeweiligen Kupplungsmuffe 2 findet.

Man erkennt, dass das Kupplungsstück 5 spiegelsymmetrisch im Vergleich zu einer das Kupplungsstück 5 teilenden Spiegelachse S ausgestaltet ist. Diese Spiegelachse S verläuft im Wesentlichen quer zu einer Rohrlängsachse A. Gegenüber dieser Rohrlängsachse A sind die beiden Hochdruckrohre 1 und auch die Kupplungsmuffen 2 sowie das Kupplungsstück 5 rotationssymmetrisch ausgestaltet. Das stellt selbstverständlich keine zwingende Anforderung dar.

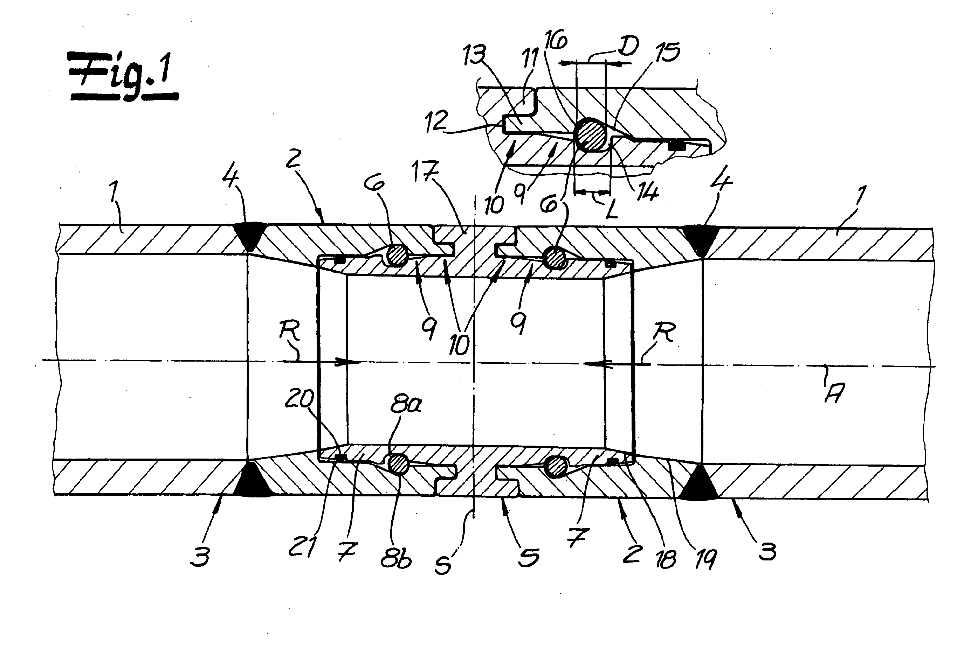

Erfindungsgemäß geht die Nuthälfte 8a im Steckzapfen 7 in Aufschubrichtung R der Kupplungsmuffe 2 auf das Kupplungsstück 5 in einen Konusbereich 9 über, welcher in der Fig. 1 vergrößert dargestellt ist. Dieser Konusbereich bzw. Zentrierkonusbereich 9 verfügt gegenüber der Rohrlängsachse A über eine Schrägstellung von einigen Grad, beispielsweise 5° oder weniger. An den Konusbereich bzw. Zentrierkonusbereich 9 schließt sich in Aufschubrichtung R ein Anlagebereich 10 am Kupplungsstück 5 bzw. dessen Steckzapfen 7 an. Dieser Anlagebereich 10 formt in Verbindung mit einem Vorsprung 11 eine im Querschnitt U-förmige Einschubnut 12 am Kupplungsstück 5.

In diese Einschubnut 12 am Kupplungsstück 5 greift ein Fortsatz 13 an der Kupplungsmuffe 2 ein. Auf diese Weise wird die jeweilige Kupplungsmuffe 2 in montiertem Zustand in axialer Richtung (Rohrlängsrichtung A) und radialer Richtung einwandfrei fixiert, so dass auch bei hohem Druck des durch die Kupplung geführten Mediums ein Aufweiten der Kupplung nicht zu befürchten ist. Der Anlagebereich 10, der Vorsprung 11 und die hierdurch gebildete Einschubnut 12 formen in Verbindung mit dem Fortsatz 13 insgesamt einen Klemmbereich 10, 11, 12, 13, welcher sich in Aufschubrichtung R der Kupplungsmuffe 2 an den Konusbereich 9 im Kupplungsstück 5 (und/oder einen nicht dargestellten Konusbereich 9 in der Kupplungsmuffe 2) anschließt.

Die aus den beiden Nuthälften 8a, 8b gebildete Einschubnut 8a, 8b für das Scherelement 6 verfügt nach dem Ausführungsbeispiel über einen Ausweichbereich 14. Dieser Ausweichbereich 14 der Einschubnut 8a, 8b für das Scherelement 6 setzt sich aus im Wesentlichen zwei Bestandteilen zusammen. Zunächst einmal verfügt die Einschubnut 8a, 8b über eine axiale Länge L, welche einen Durchmesser D des Scherelementes 6 übersteigt.

Tatsächlich beträgt die axiale Länge L der Einschubnut 8a, 8b in etwa das 1,2- bis 1,5-fache oder noch mehr des besagten Durchmessers D des Scherelementes 6. Das heißt, es gilt:

$$L \approx 1{,}2 - 1{,}5 \cdot D$$

Zu dieser axialen Länge L der Einschubnut 8a, 8b tritt noch eine Schrägflanke 15 hinzu, welche sich an einen kreisbogenartigen Bereich 16 anschließt, und zwar innerhalb der Nuthälfte 8b in der Kupplungsmuffe 2. Grundsätzlich könnte diese Schrägflanke 15 mit dem kreisbogenartigen Bereich 16 aber auch in der Nuthälfte 8a des Kupplungsstückes 5 ausgebildet sein. Jedenfalls setzt sich der Ausweichbereich 14 einerseits aus der vergrößerten axialen Länge L im Vergleich zum Durchmesser D des Scherelementes 6 und zusätzlich dem kreisbogenartigen Bereich 16 in Verbindung mit der Schrägflanke 15 zusammen. Dabei verfügt die Schrägflanke 15 über eine Schrägstellung von ca. 20° im Vergleich zur Rohrlängsachse A.

Aufgrund des spiegelsymmetrischen Charakters des Kupplungsstückes 5 im Vergleich zur Spiegelachse S sind die jeweiligen Einschubnuten 12 für die Fortsätze 13 sich jeweils gegenüberliegend ausgebildet. Dadurch formen die Einschubnuten 12 mit den Vorsprüngen 11 insgesamt einen T-förmigen Anschlag 17 für die hiergegen jeweils anliegenden Kupplungsmuffen 2. Des Weiteren erkennt man, dass das Kupplungsstück 5 mit jeweils einer endseitigen Anschrägung 18 ausgerüstet ist, die in eine Anschrägung 19 gleichen Winkels zur Rohrlängsachse A in der zugehörigen Kupplungsmuffe 2 übergeht. Schlussendlich ist noch eine umlaufende Nut 20 im Kupplungsstück 5 realisiert, die sich axial außen im Vergleich zum Scherelement 6 findet und zur Aufnahme einer Ringdichtung 21 dient.

Zur Vereinigung von Kupplungsstück 5 und jeweiliger Kupplungsmuffe 2 ist es erfindungsgemäß nicht notwendig, dass das Kupplungsstück 5 und die Kupplungsmuffe 2 jeweils axial exakt entlang der Rohrlängsrichtung A ausgerichtet sind. Vielmehr lässt der Konusbereich bzw. Zentrierkonusbereich 9 gewisse Abweichungen von dieser axialen Ausrichtung zu, welche zu Winkeln zwischen dem Kupplungsstück 5 und der jeweiligen Kupplungsmuffe 2 von mehreren Grad (bis zu 10°) korrespondieren. Da darüber hinaus die aus den beiden Nuthälften 8a, 8b gebildete Einschubnut 8a, 8b mit einem Ausweichbereich 14 ausgerüstet ist, lässt sich auch bei einer gewissen Schrägstellung oder Verkantung zwischen Kupplungsmuffe 2 und Kupplungsstück 5 das zugehörige Scherelement 6 problemlos in die Einschubnut 8a, 8b einführen und selbstverständlich auch entfernen.

Sobald die Montagestellung der Kupplungsmuffe 2 im Vergleich zum Kupplungsstück 5 erreicht ist, sorgt zudem der in die Einschubnut 12 eingreifende Fortsatz 13 dafür, dass die Muffe 2 und das Kupplungsstück 5 radial und axial gegeneinander fixiert sind. Hierzu trägt ergänzend bei, dass bei einer Aufweitung der Kupplung im Ganzen das Scherelement 6 zunehmend durch die Schrägflanke 15 verkeilt wird. Entsprechendes gilt, wenn das Kupplungsstück 5 und die Kupplungsmuffe 2 axial gegeneinander bewegt werden.

**Patentansprüche**

1. Kupplung, insbesondere Rohrkupplung für Hochdruckrohre (1) oder Hochdruckschläuche, mit jeweils an zu verbindenden Enden (3) vorgesehenen Kupplungsmuffen (2), und mit wenigstens einem die Kupplungsmuffen (2) mit Hilfe von zumindest zwei Scherelementen (6) koppelnden Kupplungsstück (5) mit in die Kupplungsmuffe (2) jeweils eingreifendem Steckzapfen (7), wobei

   - der jeweilige Steckzapfen (7) und die Kupplungsmuffe (2) eine aus zwei Nuthälften (8a, 8b) zusammengesetzte Einschubnut (8a, 8b) für das zugehörige Scherelement (6) definieren, und wobei
   - die Nuthälfte (8a) im Steckzapfen (7) und/oder die Nuthälfte (8b) in der Kupplungsmuffe (2) in Aufschubrichtung (R) der Kupplungsmuffe (2) in einen Konusbereich (9) übergeht,
   **dadurch gekennzeichnet, dass**
   - sich an den Konusbereich (9) in Aufschubrichtung (R) der Kupplungsmuffe (2) ein Klemmbereich (10, 11, 12, 13) anschließt, dass ferner
   - die jeweilige Kupplungsmuffe (2) mit einem Fortsatz (13) in eine Einschubnut (12) am Kupplungsstück (5) und **dadurch** in den Klemmbereich (10, 11, 12, 13) eingreift, und dass
   - die Einschubnuten (12) zusammen mit Vorsprüngen (11) einen insgesamt T-förmigen Anschlag (17) am Kupplungsstück (5) für die hiergegen jeweils anliegenden Kupplungsmuffen (2) formen.

2. Kupplung nach Anspruch 1, **dadurch gekennzeichnet, dass** der jeweilige Vorsprung (11) im Klemmbereich (10, 11, 12, 13) einen Anlagebereich (10) unter Bildung der in Querschnitt U-förmigen Einschubnut (12) übergreift.

3. Kupplung nach Anspruch 1 oder 2, **dadurch gekennzeichnet, dass** der Fortsatz (13) an der Kupplungsmuffe (2) in die zwischen dem Vorsprung (11) und dem Anlagebereich (10) gebildete Einschubnut (12) im Kupplungsstück (5) bei auf dem Kupplungsstück (5) montierter Kupplungsmuffe (2) eingreift.

4. Kupplung nach einem der Ansprüche 1 bis 3, **dadurch gekennzeichnet, dass** die Einschubnut (8a, 8b) für das Scherelement (6) einen Ausweichbereich

**5.** Kupplung nach einem der Ansprüche 1 bis 4, **dadurch gekennzeichnet, dass** die Einschubnut (8a, 8b) eine axiale Länge (L) aufweist, welche einen Durchmesser (D) des Scherelementes (6) übersteigt.

**6.** Kupplung nach einem der Ansprüche 1 bis 5, **dadurch gekennzeichnet, dass** die axiale Länge (L) der Einschubnut (8a, 8b) in etwa das 1,2- bis 1,5-fache oder noch mehr des Durchmessers (D) des Scherelementes (6) beträgt.

**7.** Kupplung nach einem der Ansprüche 1 bis 6, **dadurch gekennzeichnet, dass** das Kupplungsstück (5) spiegelsymmetrisch im Vergleich zu einer in Querrichtung angeordneten Spiegelachse (S) ausgebildet ist.

**8.** Kupplung nach einem der Ansprüche 1 bis 7, **dadurch gekennzeichnet, dass** das Kupplungsstück (5) jeweils rotationssymmetrisch im Vergleich zur jeweiligen Rohrlängsachse (A) ausgestaltet ist.

**9.** Kupplung nach einem der Ansprüche 1 bis 8, **dadurch gekennzeichnet, dass** das Kupplungsstück (5) eine jeweils endseitige Anschrägung (18) aufweist, die in eine Anschrägung (19) gleichen Winkels in der Kupplungsmuffe (2) übergeht.

**10.** Kupplung nach einem der Ansprüche 1 bis 9, **dadurch gekennzeichnet, dass** das Kupplungsstück (5) axial außen im Vergleich zum Scherelement (6) eine umlaufende Nut (20) für eine Ringdichtung (21) aufweist.

**11.** Verwendung einer Kupplung nach einem der Ansprüche 1 bis 10 zur Verbindung von Hochdruckrohren (1) oder Hochdruckschläuchen zur Beaufschlagung von Hydraulikmaschinen.

**12.** Verwendung nach Anspruch 11, **dadurch gekennzeichnet, dass** es sich bei den Hydraulikmaschinen um Vortriebsmaschinen handelt.

**Claims**

**1.** A coupling, in particular pipe coupling for high pressure pipes (1) or high pressure hoses, with coupling sleeves (2) provided on each end (3) to be connected, and with at least one coupling piece (5) which couples the coupling sleeves (2) by means of at least two shear elements (6) and which comprises spigots (7) engaging with each of the coupling sleeves (2), wherein

- the respective spigot (7) and the coupling sleeve (2) define an insertion groove (8a, 8b) composed of two groove halves (8a, 8b) for the associated shear element (6), and wherein
- the groove half (8a) in the spigot (7) and/or the groove half (8b) in the coupling sleeve (2) merges in slide-on direction (R) of the coupling sleeve (2) into a cone area (9),
**characterized in that**
- in the slide-on direction (R) of the coupling sleeve (2), a clamping area (10, 11, 12, 13) is connected to the cone area (9), that further
- the respective coupling sleeve (2) engages via an extension (13) with an insertion groove (12) on the coupling piece (5) and thereby with a clamping area (10, 11, 12, 13), and that
- the insertion grooves (12) together with projections (11) form as a whole a T-shaped limit stop (17) on the coupling piece (5) for each of the coupling sleeves (2) abutting there against it.

**2.** The coupling according to claim 1, **characterized in that** in the clamping area (10, 11, 12, 13), the respective projection (11) overlaps an abutment area (10) thereby forming the insertion groove (12) having a U-shaped cross-section.

**3.** The coupling according to claim 1 or claim 2, **characterized in that** the extension (13) on the coupling sleeve (2) engages with the insertion groove (12) formed between the projection (11) and the abutment area (10) in the coupling piece (5) when the coupling sleeve (2) is mounted on the coupling piece (5).

**4.** The coupling according to any one of the claims 1 to 3, **characterized in that** the insertion groove (8a, 8b) for the shear element (6) has an escape area (14).

**5.** The coupling according to any one of the claims 1 to 4, **characterized in that** the insertion groove (8a, 8b) has an axial length (L) which exceeds a diameter (D) of the shear element (6).

**6.** The coupling according to any one of the claims 1 to 5, **characterized in that** the axial length (L) of the insertion groove (8a, 8b) is approximately the 1.2-fold to 1.5-fold or even higher of the diameter (D) of the shear element (6).

**7.** The coupling according to any one of the claims 1 to 6, **characterized in that** the coupling piece (5) is formed mirror-symmetrically compared to a mirror axis (S) arranged in transverse direction.

**8.** The coupling according to any one of the claims 1 to 7, **characterized in that** the coupling piece (5) is configured in each case in a rotationally symmetric manner compared to the respective longitudinal pipe axis (A).

9. The coupling according to any one of the claims 1 to 8, **characterized in that** the coupling piece (5) has a bevel (18) on each end side which merges into a bevel (19) with the same angle in the coupling sleeve (2).

10. The coupling according to any one of the claims 1 to 9, **characterized in that** compared to the shear element (6), the coupling piece (5) has an circumferential groove (20) arranged axially on the outside for a ring seal (21).

11. A use of a coupling according to any one of the claims 1 to 10 for connecting high pressure pipes (1) or high pressure hoses for pressurizing hydraulic machines.

12. The use according to claim 11, **characterized in that** the hydraulic machines involve tunneling machines.

**Revendications**

1. Accouplement, en particulier accouplement de tuyau pour tuyaux haute pression (1) ou flexibles haute pression comprenant des manchons d'accouplement (2) prévus sur des extrémités (3) à relier et comprenant au moins une pièce d'accouplement (5) accouplant les manchons d'accouplement (2) à l'aide d'au moins deux éléments de cisaillement (6) avec un tenon d'emboîtement (7) se mettant en prise dans le manchon d'accouplement (2) respectif, sachant

- que le tenon d'emboîtement (7) respectif et le manchon d'accouplement (2) définissent une rainure d'insertion (8a, 8b) composée de deux moitiés de rainure (8a, 8b) pour l'élément de cisaillement (6) correspondant et sachant
- que la moitié de rainure (8a) fait saillie dans le tenon d'emboîtement (7) et/ou la moitié de rainure (8b) fait saillie dans le manchon d'accouplement (2) dans le sens de poussée (R) du manchon d'accouplement (2) dans une zone conique (9),
**caractérisé en ce que**
- une zone de blocage (10, 11, 12, 13) se raccorde sur la zone conique (9) dans le sens de poussée (R) du manchon d'accouplement (2), qu'en outre
- le manchon d'accouplement (2) respectif se met en prise avec un prolongement (13) dans une rainure d'insertion (12) sur la pièce d'accouplement (5) et donc dans la zone de blocage (10, 11, 12, 13), et que
- les rainures d'insertion (12) forment conjointement avec des saillies (11) une butée (17) intégralement en forme de T sur la pièce d'accouplement (5) pour les manchons d'accouplement (2) placés respectivement à leur encontre.

2. Accouplement selon la revendication 1, **caractérisé en ce que** la saillie (11) respective dans la zone de blocage (10, 11, 12, 13) empiète sur une zone d'appui (10) par formation de la rainure d'insertion (12) de section transversale en U.

3. Accouplement selon la revendication 1 ou 2, **caractérisé en ce que** le prolongement (13) sur le manchon d'accouplement (2) se met en prise dans la rainure d'insertion (12) dans la pièce d'accouplement (5) formée entre la saillie (11) et la zone d'appui (10) lorsque le manchon d'accouplement (2) est monté sur la pièce d'accouplement (5).

4. Accouplement selon l'une des revendications 1 à 3, **caractérisé en ce que** la rainure d'insertion (8a, 8b) de l'élément de cisaillement (6) présente une zone d'affaiblissement (14).

5. Accouplement selon l'une des revendications 1 à 4, **caractérisé en ce que** la rainure d'insertion (8a, 8b) présente une longueur axiale (L) qui dépasse un diamètre (D) de l'élément de cisaillement (6).

6. Accouplement selon l'une des revendications 1 à 5, **caractérisé en ce que** la longueur axiale (L) de la rainure d'insertion (8a, 8b) fait environ 1,2 à 1,5 fois ou plus encore le diamètre (D) de l'élément de cisaillement (6).

7. Accouplement selon l'une des revendications 1 à 6, **caractérisé en ce que** la pièce d'accouplement (5) est formée en symétrie de miroir en comparaison avec un axe miroir (S) placé dans le sens transversal.

8. Accouplement selon l'une des revendications 1 à 7, **caractérisé en ce que** la pièce d'accouplement (5) est formée respectivement en symétrie de rotation en comparaison avec l'axe longitudinal du tuyau (A) respectif.

9. Accouplement selon l'une des revendications 1 à 8, **caractérisé en ce que** la pièce d'accouplement (5) présente un chanfreinage (18) terminal respectif qui passe dans un chanfreinage (19) de même angle dans le manchon d'accouplement (2).

10. Accouplement selon l'une des revendications 1 à 9, **caractérisé en ce que** la pièce d'accouplement (5) présente axialement à l'extérieur en comparaison avec l'élément de cisaillement (6), une rainure circulaire (20) pour un joint annulaire (21).

11. Emploi d'un accouplement selon l'une des revendications 1 à 10 pour relier des tuyaux haute pression (1) ou des flexibles haute pression pour alimenter des machines hydrauliques.

12. Emploi selon la revendication 11, **caractérisé en ce qu'**il s'agit d'abatteuses-chargeuses pour les machines hydrauliques.

Fig.1

Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1865244 A2
- DE 29704063 U1
- DE 102005001993 A1
- DE 10146186 C1